(19) Europäisches Patentamt
European Patent Office
Office européen des brevets

(11) EP 2 527 138 B1

(12) EUROPEAN PATENT SPECIFICATION

(45) Date of publication and mention of the grant of the patent:
**18.03.2015 Bulletin 2015/12**

(21) Application number: **11732995.3**

(22) Date of filing: **18.01.2011**

(51) Int Cl.:
***B32B 5/26*** *(2006.01)* ***A41D 13/00*** *(2006.01)*
***A41D 31/00*** *(2006.01)* ***A41D 31/02*** *(2006.01)*
***D01F 1/10*** *(2006.01)* ***D03D 15/12*** *(2006.01)*
***D04H 1/42*** *(2012.01)* ***D06M 17/00*** *(2006.01)*

(86) International application number:
**PCT/JP2011/050691**

(87) International publication number:
**WO 2011/087125 (21.07.2011 Gazette 2011/29)**

(54) **LAMINATED FABRIC FOR PROTECTIVE CLOTHING AND PROTECTIVE CLOTHING USING SAME**

BESCHICHTETE FASER FÜR EINE SCHUTZKLEIDUNG UND SCHUTZKLEIDUNG DAMIT

TISSU STRATIFIÉ POUR VÊTEMENT DE PROTECTION ET VÊTEMENT DE PROTECTION UTILISANT LEDIT TISSU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.01.2010 JP 2010008461**

(43) Date of publication of application:
**28.11.2012 Bulletin 2012/48**

(73) Proprietors:
- **Teijin Limited**
  **Osaka-shi, Osaka 541-0054 (JP)**
- **Japan As Represented By Commissioner Of The Fire And Disaster Management Agency**
  **Tokyo 100-8926 (JP)**

(72) Inventors:
- **WAKATSUKI, Kaoru**
  **Communications 4-35-3 Jindaiji-higashi-machi**
  **Chofu, Tokyo 182-8508 (JP)**
- **IZAWA, Hajime**
  **Ibaraki-shi**
  **Osaka 567-0006 (JP)**
- **ISHIHARA, Shigeru**
  **Matsuyama-shi**
  **Ehime 791-8041 (JP)**
- **YAGURA, Yasushige**
  **Matsuyama-shi**
  **Ehime 791-8041 (JP)**

(74) Representative: **Hallybone, Huw George**
**Carpmaels & Ransford LLP**
**One Southampton Row**
**London WC1B 5HA (GB)**

(56) References cited:
**EP-A1- 1 939 339** **WO-A1-2007/018082**
**JP-A- 2002 115 106** **JP-A- 2008 101 294**
**JP-A- 2009 263 809** **JP-A- 2009 280 942**

- **DATABASE WPI Week 200058 Thomson Scientific, London, GB; AN 2000-604902 XP002721110, & JP 2000 212810 A (TEIJIN LTD) 2 August 2000 (2000-08-02)**
- **DATABASE WPI Week 200846 Thomson Scientific, London, GB; AN 2008-H23255 XP002721111, & JP 2008 101294 A (KURARAY CO LTD) 1 May 2008 (2008-05-01)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

[Technical Field]

The present invention relates to a laminated fabric for protective clothing which is lightweight and excellent in comfort properties and has high heat resistance and heat shielding properties, and protective clothing using the same.

[Background Art]

As heat-resistant protective clothing worn by firefighters during fire extinguishing operations, there have hitherto been used flame-retardant organic fabrics of aramid, polyphenylene sulfide, polyimide, polybenzimidazole or the like.

In recent years, for the purpose of improving safety and comfort properties for the firefighters, there have been proposed a composite material in which (a) a front fabric is composed of meta-aramid fiber and para-aramid fiber, (b)an intermediate layer has moisture-permeable waterproof properties, and (c) a heat shielding layer is composed of a nonwoven fabric of meta-aramid fiber and a woven fabric of meta-aramid fiber, and protective clothing using a fabric which have a composite structure comprising the above (a) to (c) and is excellent in flame retardance and heat shielding properties (Patent Document 1). Further, in such a fabric, for the purpose of preventing radiation heat generated by fire, ones surface-processed by coating or vapor deposition of metallic aluminum on the fabric composed of such a flame-retardant fiber have been frequently used (for example, see claims 3 and 4 of Patent Document 1). However, when the fabric on which the coating is performed is used as the protective clothing, there is a drawback that the weight thereof becomes extremely heavy. Further, from the viewpoint of forming an air layer, a laminated structure is most useful for improving heat shielding properties. However, this laminated structure causes a coarse feeling, and it is extremely difficult to inhibit a significant increase in the weight of the protective clothing.

Furthermore, for the purpose of improving heat shielding properties without a significant increase in the weight and further improving a wear feeling without the coarse feeling, a heat-resistant laminated structure utilizing raising (Patent Document 2) and the like are proposed. This has a certain effect in terms of improvement of heat shielding properties, but has drawbacks that comfort properties are impaired because accumulation of heat generated from the body is also increased, and that when a raising level or the weight is decreased, heat shielding properties are also decreased as such.

Patent document 3 discloses a laminated fabric for protective clothing comprising a base cloth on the upper side and a reinforcing cloth on the under side.

[Prior-Art Documents]

[Patent Documents]

[Patent Document 1] JPA-2000-212810
[Patent Document 2] JPA-2009-263809
[Patent Document 3] EP 1939 339 A1

[Outline of the Invention]

[Problems That the Invention Is to Solve]

An object of the present invention is to solve the problems of the above-mentioned prior art and to provide a laminated fabric for protective clothing capable of achieving both higher heat shielding properties and comfort properties, and protective clothing using the same.

[Means for Solving the Problems]

In view of the above-mentioned problems, the present inventors have made intensive studies. As a result, it has been found that a fabric structure capable of achieving high heat shielding properties, lightweight properties and comfort properties can be provided by the following constitution.

That is to say, the present invention relates to a laminated fabric for protective clothing comprising two or more fabric layers including an outer layer and an inner layer, with the inner layer disposed on a skin side, when used in protective clothing, wherein the outer layer is a fabric composed of a fiber having an LOI value (limiting oxygen index)

of 21 or more measured by JIS L 1091 E method, the inner layer is a fabric composed of a fiber having an LOI value (limiting oxygen index) of 21 or more measured by JIS L 1091 E method, and a thermal diffusivity of $2.2\times10^{-6}$ $m^2 \cdot s^{-1}$ or more, and the fabric has a porosity ranging from 85% to 98%, a thickness ranging from 0.5 mm to 8.0 mm and a basis weight ranging from 80 $g/m^2$ to 250 $g/m^2$.

[Advantages of the Invention]

According to the present invention, a laminated fabric having lightweight properties, comfort properties and high heat shielding properties can be provided, and protective clothing useful as working clothing and the like used under high-temperature circumstances including firefighter clothing can be provided by using the same.

[Mode for Carrying Out the Invention]

The present invention will be described in detail below.

A laminated fabric for protective clothing of the present invention is a laminated fabric comprising two or more fabric layers of an outer layer and inner layer.

In the present invention, it is necessary that the outer layer is a fabric having a limiting oxygen index (LOI) of 21 or more. The limiting oxygen index (LOI) is preferably 24 or more. The limiting oxygen index is the atmospheric oxygen concentration (%) necessary for continuing combustion, and 21 or more means that combustion does not continue in the ordinary air, resulting in self extinguishing. This can exhibit high heat resistance. Here, the limiting oxygen index (LOI) is a value measured in accordance with JIS L1091 (E method) as described above.

As described above, use of the fabric in which the outer layer has a limiting oxygen index (LOI) of 21 or more can exhibit high heat resistance. Fibers composing the above-mentioned fabric include, for example, meta-aramid fiber, para-aramid fiber, polybenzimidazole fiber, polyimide fiber, polyamide-imide fiber, polyetherimide fiber, polyarylate fiber, polyparaphenylene benzobisoxazole fiber, novoloid fiber, polychlal fiber, flame-retardant acrylic fiber, flame-retardant rayon fiber, flame-retardant polyester fiber, flame-retardant cotton fiber, flame-retardant wool fiber and the like. In particular, in the present invention, it is useful to use meta-aramid fiber such as polymetaphenylene isophthalamide fiber, para-aramid fiber for the purpose of improving the strength of a woven fabric or a knitted fabric, that is to say, polyparaphenylene terephthalamide fiber or a fiber in which a third component is copolymerized therewith, or the like. As one example of the polyparaphenylene terephthalamide copolymer, there is exemplified copoly(paraphenylene-3,4'-oxydiphenylene terephthalamide) shown in the following formula:

[Chemical Formula 1]

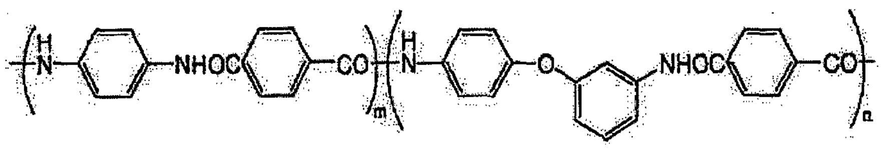

(wherein m and n represent positive integers.)

In the above-mentioned fibers, filaments or staple fibers may be used. Further, two or more kinds of the above-mentioned fibers may be used as a combined filaments or mixed fiber spinning.

The above-mentioned fabric may be used in the form of a woven fabric, a knitted fabric, a nonwoven fabric or the like, but the woven fabric is particularly preferred. Further, the weaving pattern of the woven fabric may be any, such as plain weave, twill weave or sateen weave. Furthermore, in the woven fabric or the knitted fabric, combined weaving or combined knitting may be performed by using two kinds of the fibers.

In particular, as the fabric used for the outer layer in the present invention, it is preferably exemplified that the meta-aramid fiber and the para-aramid fiber are used in the form of a mixed spun yarn. Themixing ratio of the para-aramid fiber is preferably 5% by weight or more based on the total fibers constituting the fabric. However, the mixing ratio of the para-aramid fiber is preferably kept to 60% by weight or less because of its easy fibrillation.

Incidentally, as the fabric used for the outer layer (front fabric layer), there is preferably used one having a basis weight ranging from 160 to 400 $g/m^2$. When the above-mentioned basis weight is less than 160 $g/m^2$, there is a possibility of failing to obtain sufficient heat-resistant performance. On the other hand, when the basis weight exceeds 400 $g/m^2$, a wear feeling at the time when formed into the protective clothing is unfavorably deteriorated.

On the other hand, in the present invention, the fabric of the inner layer is a fabric composed of the fiber having

a limiting oxygen index (LOI) of 21 or more, preferably 24 or more, and a diffusivity in a fiber axis direction of $2.2\times10^{-6}$ $m^2\cdot s^{-1}$ or more, preferably $2.5\times10^{-6}$ $m^2\cdot s^{-1}$ or more, and it is critically important that the fabric has a porosity ranging from 85% to 98%, preferably 90% to 96%, a thickness ranging from 0.5 mm to 8.0 mm, preferably 0.9 mm to 5.0mm, and a basis weight ranging from 80 $g/m^2$ to 250 $g/m^2$, preferably 94 $g/m^2$ to 200 $g/m^2$. When these requirements are fulfilled at the same time, it first becomes possible to attain the object of the present invention.

That is to say, the present inventors have reached a concept that when both of characteristics that the amount of heat accumulated in clothing when exposed to fire is decreased and that the heat accumulated as above is effectively diffused to the planar direction thereof are given to the fabric of the inner layer, and moreover, when both of these characteristics can be realized at the same time by one sheet of fabric, protective clothing which is excellent in heat shielding properties, moreover lightweight and excellent in comfort properties is obtained. The present inventors have found that this can be achieved by adopting the fabric which meets the above-mentioned requirements at the same time for the inner layer.

Accordingly, the limiting oxygen index (LOI) of the fabric composing the inner layer is required to be 21 or more, thereby being able to exhibit high heat resistance.

Further, the fiber composing the fabric of the inner layer is required to have a thermal diffusivity in a fiber axis direction of $2.2\times10^{-6}$ $m^2\cdot s^{-1}$ or more, thereby resulting in keeping a heat-resistant function in a thickness direction of the fabric and adding a high thermal diffusion function in a planar direction to improve heat shielding performance.

Incidentally, the thermal diffusivity in a fiber axis direction can be easily adjusted by selecting a proper fiber species or imparting a proper thermal diffusion function to the fiber itself.

Further, in the case where the fabric composing the inner layer has a porosity of less than 85%, a thickness of less than 0.5 mm or a basis weight of more than 250 $g/m^2$, even when any other requirements are met, the amount of heat transferred to a skin side at the time when exposed to fire increases. Further, in the case where the fabric composing the inner layer has a porosity of 98% or more, a thickness of more than 8.0 mm or a basis weight of less than 80 $g/m^2$, even when any other requirements are met, the fiber as a medium which performs thermal diffusion by thermal conduction is insufficient to fail to obtain a necessary thermal diffusion effect. Accordingly, in either case, the desired heat shielding performance and comfort properties are not obtained.

Incidentally, the porosity of the fabric composing the inner layer can be easily adjusted by constitution (species of raw staple fiber and spinning in use, and structure) of a knitted or woven fabric or a nonwoven fabric, conditions of press or the like.

Further, the thickness or basis weight of the fabric composing the inner layer can also be adjusted arbitrarily and easily in the same manner as described above.

The fabric used for the inner layer may be any one of a nonwoven fabric, a woven fabric and one obtained by raising thereof. However, a nonwoven fabric structure is preferred in terms of a bulky structure, that is to say, high durability of high porosity.

Further, the air permeability of that fabric is preferably 20 $cm^3/m^2\cdot sec$ or more. In this case, not only the fabric is lightweight, but also performance of releasing heat or the sweat generated by the body to the outside is significantly enhanced. Accordingly, at the time when formed into the protective clothing, comfort properties are enhanced. The above-mentioned air permeability is more preferably 30 $cm^3/m^2\cdot sec$ or more.

Incidentally, the air permeability of the fabric composing the inner layer can also be easily adjusted by constitution (raw staple fiber and spinning species in use, and design) of a knitted or woven fabric or a nonwoven fabric, a press or the like.

The fiber composing the fabric used for the above-mentioned inner layer is not limited in terms of a material or constitution thereof as long as it meets the above-mentioned conditions. In order to improve thermal conduction, it is also possible to use one into which fine particles having a high thermal conductivity, such as metal or carbon, are kneaded, or one on a surface of which the particles are deposited. As the above-mentioned fiber, there can be used carbon fiber or metal fiber. Further, preferred examples thereof include aramid fiber having a good record in practical use or studies for a protective clothing application, polybenzimidazole fiber, polyimide fiber, polyamide-imide fiber, polyetherimide fiber, polyarylate fiber, polyparaphenylene benzobisoxazole fiber, novoloid fiber, polychlal fiber, flame-retardant acrylic fiber, flame-retardant rayon fiber, flame-retardant polyester fiber, flame-retardant cotton fiber, flame-retardant wool fiber and the like.

Incidentally, as the fiber composing the fabric used for the inner layer, it is preferred to use meta-aramid fiber such as polymetaphenylene isophthalamide fiber, para-aramid fiber for the purpose of improving the strength of the woven fabric or knitted fabric, that is to say, polyparaphenylene terephthalamide fiber or a fiber in which a third component is copolymerized therewith (for example, copoly(paraphenylene-3,4'-oxydiphenylene terephthalamide) fiber, or the like, similarly in the case of the outer layer.

In particular, in the present invention, there can be preferably mentioned a fiber based on similar aramid fiber as used for the above-mentioned outer layer, which has most good records in practical use for a protective clothing application, and increased in thermal conductivity and flame retardance by kneading therein fine particles having a high

thermal conductivity as will be described later. Incidentally, for example, when the fiber itself meets the requirements of the above-mentioned LOI value, thermal conductivity and the like, such as the carbon fiber or the metal fiber, it can also be used as it is without kneading the fine particles therein. In particular, preferred examples of the fiber composing the inner layer include one having a carbon fiber in an amount of 50% by weight or more.

Although the kind of the fine particles used in the present invention is not particularly limited, fine particles composed of a material having a thermal conductivity of 70 W/(m·k) or more are preferred. When the thermal conductivity is high like this, it becomes possible to increase the thermal conductivity of the fiber in a smaller amount added, and a decrease in strength of the fiber due to the addition of the fine particles can be inhibited. Preferred examples of such fine particles specifically include carbon powder, carbon nanotubes, diamond, silver, copper, gold, aluminum and the like. Here, for example, the thermal conductivity of carbon is 129 W/(m·k), and the thermal conductivities of silver, copper and gold are 427 W/(m·k), 402 W/(m·k) and 315 W/(m·k), respectively (see Chemical Handbook, Basic Edition, edited by The Chemical Society of Japan (Maruzen Co., Ltd.)).

Incidentally, the content of these fine particles in the fiber is usually from 1 to 60% by weight, and preferably from about 3 to 35% by weight, although it depends on the specific weight of the fine particles.

Further, the number average particle size of these fine particles is usually 10 μm or less, and preferably 1μm or less.

In the laminated fabric of the present invention described above, it is also possible to dispose a fabric in which a moisture-permeable waterproof film is laminated on and fixed to a fabric composed of a fiber having a LOI value of 25 or more, as an intermediate layer between the above-mentioned outer layer and inner layer. Water immersion from the outside can be prevented while keeping comfort properties as a fabric structure thereby, and this fabric is more suitable for fire-protecting clothing for firefighters who conduct fire-fighting operations such as water discharge. For the fabric used, it is preferred to use the one having a basis weight ranging from 50 to 200 g/m$^2$. In the case of less than 50 g/m$^2$, there is a possibility of failing to obtain sufficient heat shielding performance. On the other hand, in the case where the basis weight exceeds 200 g/m$^2$, a wear feeling at the time when formed into the protective clothing is unfavorably deteriorated. This fabric is preferably laminated with a thin film composed of moisture-permeable waterproof polytetrafluoroethylene or the like, thereby improving moisture-permeable waterproof properties and chemical resistance and being able to enhance transpiration of the sweat of a wearer, which allows thermal stress of the wearer to be decreased. It is preferred that the thin film to be laminated on the above-mentioned intermediate layer has a basis weight per unit area ranging from 10 to 50 g/m$^2$. Incidentally, even when the fabric of the intermediate layer is laminated with the thin film as described above, the basis weight of the fabric of the intermediate layer laminated is preferably within the range of 50 to 200 g/m$^2$ described above.

Further, in the laminated fabric of the preset invention, it is also possible to add a back fabric layer to a further inner side than the inner layer, that is to say, to a skin side, in view of practical utilities such as texture, wearing comfort properties and durability. For the fabric used for the back fabric layer, it is preferred to use the one having a basis weight ranging from 20 to 200 g/m$^2$.

As the back fabric layer, there is used a woven fabric, a nonwoven fabric, a knitted fabric or the like using a flame-retardant fiber including the above-mentioned meta-aramid fiber, para-aramid fiber, polybenzimidazole fiber and polyimide fiber as a raw material.

The laminated fabric of the present invention can be produced, for example, by laminating the outer layer fabric and the inner layer fabric, sandwiching the intermediate layer fabric therebetween as needed, further adding the fabric acting as the back fabric layer to a further inner side than the inner layer as needed, laminating these fabrics, and sewing them by a known method. Further, in the laminated fabric of the present invention, the outer layer and the inner layer laminated on each other may be sewed with a fastener attached thereto, followed by unzipping, thereby making these fabrics separable as needed.

The protective clothing of the present invention is formed using the laminated fabric described above. In order to form the above-mentioned laminated fabric into the protective clothing, it can be produced by sewing or the like in a known manner. In this case, the outer layer and inner layer fabrics are not required to be bonded to each other, and may be laminated and sewed together in the same manner as described above. Further, as described above, the inner layer fabric may be removable from the outer layer fabric using the fastener or the like.

[Examples]

The present invention will be described below in more detail with reference to Examples. Incidentally, respective physical properties in Examples were measured by the following methods.

(1) Basis Weight

The basis weight was measured by a method in accordance with JIS L 1096.

(2) Thickness

Measurement was made using a Digimatic thickness tester by a method in accordance with JIS L 1096-90 (woven fabric) or JIS L 1018-90 (knitted fabric).

(3) Porosity of Fabric

The weight of a 30 cm square fabric was measured, and then, the thickness thereof was measured by the above-mentioned method, thereby calculating the volume of the fabric. The density of the fabric was calculated by dividing the weight of the fabric measured, by the volume of the fabric. Then, the volume fraction of a constituent fiber was calculated by dividing this by the density of the fiber, and the porosity of the fabric was calculated by subtracting this from 1.

(4) Air Permeability

The air permeability was measured by JIS L 1096-A method.

(5) Limiting Oxygen Index (LOI)

The limiting oxygen index was measured by a method in accordance with JIS L 1091 (E method).

(6) Thermal Diffusivity of Fiber

The thermal diffusivity ($\alpha$) in a longitudinal direction (fiber axis direction) of an object fiber was determined by an AC-calorimetric method using a thermal diffusivity measuring apparatus (manufactured by ULVAC-RIKO, Inc., model: LaserPIT). A bundle of single fibers was used as a test specimen, and measurement was made under conditions of 25°C in a vacuum atmosphere using an irradiation light semiconductor laser and a temperature sensor E thermocouple (having a wire diameter of 100 $\mu$m and adhered with a silver paste), thereby measuring the thermal diffusivity.

Then, from the specific heat capacity ($C_p$) measured by the JIS K 7123 method and the density ($\rho$) measured by a density gradient tube method (n-heptane/carbon tetrachloride, 25°C), the thermal conductivity ($\kappa$) was calculated by the following equation:

$$\kappa=\alpha\rho C_p.$$

(7) Specific Gravity

The specific gravity was measured by a method in accordance with JIS K 7112 (Method for Measuring the Density and the Specific Gravity of Plastic/Non-Foamed Plastic).

(8) Heat Shielding Test (Heat Shielding Property)

The time until an increase in temperature reached 24°C when exposed to a specified flame (HTI24) was measured by a method in accordance with ISO9151. The longer this time is, the more excellent the protective performance is.

(9) Comfort property Test

The total amount of heat loss (THL) (unit: $W/m^2$) was measured by a method in accordance with ASTM F1868. When this value is larger, it is shown that the protective clothing is excellent in comfort properties.

(10) Number Average Particle Size of Fine Particles

For the number average particle size of fine particles, when the average particle dispersion area per observed cross-sectional area of 25 $\mu m^2$ at the time when a fiber was cut and a cross section thereof was observed at 100,000-fold magnification under an electron microscope was given as S ($\mu m^2$), (Y) calculated by the following equation was taken as the dispersion average corresponding size.

$$Y\ (nm) = 2 \times \sqrt{(S/\pi)}$$

Respective materials were prepared by methods and procedures as described below.

· Fine Carbon Particles (Carbon Black)

Carbon powder ("Carbon Black FD-0721" manufactured by Dainichiseika Color & Chemicals Mfg. Co., Ltd.) was used. The number average particle size was 0.36 μm.)

· Carbon Nanotubes

Carbon nanotubes (average diameter: 68 nm, average length: 8 μm, bulk density: 0.004 g/$cm^3$) manufactured by Nanocarbon Technologies Co., Ltd. were used.

· Fine Diamond Powder

In a quartz flask, 6 g of commercially available cluster diamond (diamond: 80% by weight, graphite: 6% by weight, amorphous carbon: about 10% by weight, carbon single bond component: 4% by weight, measured by a Raman spectrum method) was placed together with 550 ml of 10% concentrated nitric acid-concentrated sulfuric acid, followed by boiling for 2 hours at a temperature between 300 and 310°C. After cooled to room temperature, a large amount of water was added and centrifugation was performed, followed by repetition of decantation to perform purification until the pH exceeded 3. Then, even when a dispersing agent is not particularly added, a grey dispersion having no precipitate was obtained. This was dried to produce purified fine diamond particles. The number average particle size was 0.64 μm.

· Fine Aluminum Particles

Fine α-crystal type aluminum oxide particles (AKP-30) manufactured by Sumitomo Chemical Co., Ltd. were used. The number average particle size was 0.40 μm.

· Fine Silver Particles

After 5.12 g of silver nitrate was dissolved in 1,000 ml of an aqueous solvent in which pure water and ethanol were mixed at a ratio of 1:1 by weight, aqueous ammonia was added to prepare a solution 1 in which the pH of the solution was adjusted to 11.3±1. When the aqueous ammonia was added, the solution first became cloudy with brown coloration, but turned colorless and transparent when the pH reached 11.3.

Then, 52.8 g of L-ascorbic acid as a reducing agent and 5. 6 g of sodium laurate as a surface treating agent were dissolved in 1, 000 ml of an aqueous solvent in which pure water and ethanol were mixed at a ratio of 1:1 by weight to prepare a solution 2.

The solution 1 was gradually added dropwise to the above-mentioned solution 2 with stirring at a solution temperature of 25°C to reduce and precipitate fine silver particles. Then, the fine silver particles precipitated were recovered by centrifugation, and cleaned 4 times using the aqueous solvent in which pure water and ethanol were mixed at a ratio of 1:1 by weight, followed by drying to obtain fine silver particles. The number average particle size was 0.42 μm.

· Fine Copper Particles

An aqueous solution (pH adjusting solution) in which sodium hydroxide was dissolved was added to a solution in which 140 g of copper formate tetrahydrate was dissolved in 1,000 cc of water, thereby adjusting the solution pH to 13. This solution and hydrazine hydrate were mixed with each other, and this mixed solution was heated at 80°C (heating time: 3 hours). Then, a precipitated powder was obtained. This was allowed to stand for 1 hour to cool it, and the solution was filtered using a glass filter under room temperature. After washed with water of pH 7, the powder was cleaned with acetone and dried to obtain copper powder. The number average particle size was 0.40 μm.

· Fine Gold Particles

In an autoclave (500 mm in inner diameter and 800 mm in height), there were placed 300 g of a gold thin wire,

5 liters of a chloroauric acid aqueous solution (gold: 10 g/liter) and 0.5 g of dextrin, and after replacement with a nitrogen gas atmosphere, the temperature was increased to 180°C and maintained for 30 minutes. Then, filtration and cleaning were performed to obtain fine gold particles. The number average particle size was 0.43 μm.

· Aramid Fiber and Aramid Fiber Containing Fine Particles

The preparation of a polymer solution (dope) used in the test and blend spinning of carbon black were performed by the following methods.

Preparation of Dope

Into a mixing tank having an anchor-shaped stirring blade, in the inside of which nitrogen was allowed to flow, 2,051 g of N-methyl-2-pyrrolidone (hereinafter referred to as NMP) having a moisture content of 20 ppm was put, and 2,764 g of paraphenylenediamine and 5,114 g of 3,4'-diaminodiphenylether were precisely weighed and put into it and dissolved therein. Then, 10, 320 g of terephthaloyl chloride was precisely weighed and put into this diamine solution in a state where the temperature thereof was 30°C and the number of stirring revolutions was 64 revolutions/min. The temperature of the solution was increased to 53°C by reaction heat, followed by heating for 60 minutes to 85°C. Stirring was further continued at 85 °C for 15 minutes, and the termination of an increase in viscosity of the solution was taken as the termination of the polymerization reaction.

Thereafter, 16.8 kg of an NMP slurry containing 22.5% by weight of calcium hydroxide was put into it, and stirring was continued for 20 minutes. A dope adjusted to pH 5.4 was filtrated through a filter having an opening of 30 μm to complete the preparation of a polymer solution having a polymer concentration of 6% by weight (hereinafter referred to as a dope) . Then, fine particles (fine particles of silver, copper, gold or the like) were added to this polymer solution, and stirring was continued again for 30 minutes to disperse the fine particles. The fine particle-containing polymer solution obtained was extruded from a pack and spinning nozzles through a metering pump, and thereafter, taken off by dry jet spinning. A product was taken up through coagulation, drying, heat drawing and finishing oil application. Then, stuffer crimping was performed by a crimper as needed, followed by cutting to perform processing to raw staple fibers having a length of 51 mm. Further, the fibers were processed to 60 count (cotton count) spun yarns as needed.

In the case where carbon black was added to the fiber, an NMP slurry of carbon black was quantitatively injected at a pressure of 10 to 20 kg/cm$^2$ into the above-mentioned dope while being supplied to a spinning head for blend spinning of carbon black, and immediately, dynamic mixing was performed. Subsequently, a sufficient mixing action was imparted by a 20 or more step static mixer. Then, the mixed dope was extruded from a pack and spinning nozzles through a metering pump, and thereafter, taken off by dry jet spinning. A product was taken up through coagulation, drying, heat drawing and finishing oil application. Then, stuffer crimping was performed by a crimper as needed, followed by cutting to perform processing to raw staple fibers having a length of 51 mm. Further, the fibers were processed to 60 count (cotton count) spun yarns as needed.

Incidentally, for the aramid fiber containing no fine particles, raw staple fibers were prepared in the same manner as in the case of the aramid fiber containing fine particles with the exception that the above-mentioned fine particles were not added.

· Nonwoven Fabrics (Nonwoven Fabrics 1 to 29: Inner Layer Fabrics)

Carding was performed using various kinds of raw staple fibers having a length of 51 mm obtained as described above, followed by lamination to a necessary weight per unit, and thereafter, nonwoven fabrics were obtained by a needle punch method. After the preparation of the nonwoven fabrics, the thickness was adjusted by calender processing using a heat metal roller or a resin roller as needed.

Incidentally, with respect to nonwoven fabric 12, a raw staple fiber and a nonwoven fabric were prepared in the same manner as in the case of the aramid fiber to which the fine particles were added, with the exception that no fine particles were added.

· Woven Fabric 1 (Inner Layer Fabric)

Using 60 count two-folded spun yarns composed of heat-resistant fiber in which polymetaphenylene isophthalamide fiber (single fiber fineness: 2.2 dtex, cut length: 51 mm, manufactured by Teij in Techno Products Limited, trade mark name: Conex) and copoly(paraphenylene-3,4'-oxydiphenylene terephthalamide) fiber (single fiber fineness: 1.5dtex, cut length: 51 mm, manufactured by Teijin Techno Products Limited, trade mark name: Technora) were mixed at a mixing weight ratio of 90:10, a plain woven fabric having a basis weight of 170 g/m$^2$ was prepared by using a rapier loom. The woven fabric was raised by raising processing of rubbing it for 30 seconds using a raising machine with a #

280-mesh sand paper attached thereto. Incidentally, in nonwoven fabric 1, the fine carbon particles were added only to the Technora side.

· Woven Fabric 2 (Inner Layer Fabric)

Using PAN-based carbon fiber (manufactured by Toho Tenax Co., Ltd., single fiber diameter: 7 μm, filament number: 1,000 filaments, thermal conductivity: 10 W/m·K), a plain woven fabric having a basis weight of 170 g/m$^2$ was prepared by using a rapier loom. The woven fabric was raised by raising processing of rubbing it for 30 seconds using a raising machine with a # 280-mesh sand paper attached thereto.

· Woven Fabric A and Woven Fabric B (Outer Layer Fabrics)

Using 40 count two-folded spun yarns composed of heat-resistant fiberin which polymetaphenyleneisophthalamide fiber (single fiber fineness: 2.2 dtex, cut length: 51 mm, manufactured by Teij in Techno Products Limited, trade mark name: Conex) and copoly(paraphenylene-3,4'-oxydiphenylene terephthalamide) fiber (single fiber fineness: 1.5dtex, cut length: 51 mm, manufactured by Teijin Techno Products Limited, trade mark name: Technora) were mixed at a mixing weight ratio of 90:10, a ripstop plain woven fabric was prepared by a known method, and scoured to remove a sizing agent and an oil on a surface of the fabric. This fabric was used as an outer layer. Fabric A has a basis weight of 390 g/m$^2$, and fabric B has a basis weight of 260 g/m$^2$.

· Woven Fabric C (Intermediate Layer)

There was used a woven fabric (basis weight: 75 g/m$^2$, LOI value: 25) laminated with a moisture-permeable water-proof film (manufactured by Japan Gore-Tex Inc., basis weight: 35 g/m$^2$) made of polytetrafluoroethylene, which was obtained by weaving 40 count spun yarns composed of heat-resistant fibers in which polymetaphenylene isophthalamide fiber (manufactured by Teij in Techno Products Limited, trademarkname: Conex, single fiber fineness: 2.2 dtex, cut length: 51 mm) and copoly(para-phenylene-3,4'-oxydiphenylene terephthalamide) fiber (manufactured by Teijin Techno Products Limited, trade mark name: Technora, single fiber fineness: 1.7 dtex, cut length: 51 mm) were mixed at a mixing weight ratio of 90:10.

· Woven Fabric D (Back Fabric Layer)

A plain woven fabric having a basis weight of 80 g/m$^2$ was prepared by using copoly

(paraphenylene-3,4'-oxydiphenylene terephthalamide)

filament yarns (manufactured by Teij in Techno Products Limited, trade mark name: Technora, single fiber fineness: 0.83 dtex, total fineness: 830 dtex).

The respective fabrics of these outer layer, intermediate layer, inner layer and back fabric layer (additional back fabric) were laminated to obtain laminated fabrics.

Examples 1 to 24 and Comparative Examples 1 to 10

The evaluation results of the laminated fabrics obtained as described above are shown in Table 1 together with Examples 1 to 24 and Comparative Examples 1 to 10.

[Table 1]

| | Outer Layer Fabric | | Fiber Constituting Outer Layer Fabric | Intermediate Layer | |
|---|---|---|---|---|---|
| | Sample | Basis Weight [g/m$^2$] | LOI | Sample | Basis Weight [g/m$^2$] |
| Example 1 | Fabric A | 390 | 29 | - | |
| Example 2 | Fabric A | 390 | 29 | - | |
| Example 3 | Fabric A | 390 | 29 | - | |
| Example 4 | Fabric A | 390 | 29 | - | |
| Comparative Example 1 | Fabric A | 390 | 29 | - | |
| Example 5 | Fabric B | 260 | 29 | - | |
| Example 6 | Fabric B | 260 | 29 | - | |
| Comparative Example 2 | Fabric B | 260 | 29 | - | |
| Comparative Example 3 | Fabric B | 260 | 29 | - | |
| Example 7 | Fabric A | 390 | 29 | - | |
| Comparative Example 4 | Fabric A | 390 | 29 | - | |
| Comparative Example 5 | Fabric A | 390 | 29 | - | |
| Example 8 | Fabric A | 390 | 29 | - | |
| Example 9 | Fabric A | 390 | 29 | - | |
| Example 10 | Fabric A | 390 | 29 | - | |
| Comparative Example 6 | Fabric A | 390 | 29 | - | |
| Example 11 | Fabric A | 390 | 29 | - | |
| Example 12 | Fabric A | 390 | 29 | - | |
| Comparative Example 7 | Fabric A | 390 | 29 | - | |
| Comparative Example 8 | Fabric A | 390 | 29 | - | |
| Comparative Example 9 | Fabric A | 390 | 29 | - | |
| Example 13 | Fabric B | 260 | 29 | - | |

| | Outer Layer Fabric | | Fiber Constituting Outer Layer Fabric | Intermediate Layer | |
|---|---|---|---|---|---|
| | Sample | Basis Weight [$g/m^2$] | LOI | Sample | Basis Weight [$g/m^2$] |
| Comparative Example 10 | Fabric B | 260 | 29 | - | |
| Example 14 | Fabric A | 390 | 29 | - | |
| Example 15 | Fabric A | 390 | 29 | - | |
| Example 16 | Fabric A | 390 | 29 | - | |
| Example 17 | Fabric A | 390 | 29 | - | |
| Example 18 | Fabric A | 390 | 29 | - | |
| Example 19 | Fabric A | 390 | 29 | - | |
| Example 20 | Fabric A | 390 | 29 | - | |
| Example 21 | Fabric A | 390 | 29 | - | |
| Example 22 | Fabric B | 260 | 29 | Fabric C | 90 |
| Example 23 | Fabric B | 260 | 29 | - | |
| Example 24 | Fabric B | 260 | 29 | Fabric C | 90 |

[Table 1 (continued)]

| | Inner Layer Fabric | | | | |
|---|---|---|---|---|---|
| | Sample | Thickness [mm] | Basis Weight [g/m$^2$] | Porosity [%] | Air Permeability [cc/(m$^2$·s)] |
| Example 1 | Nonwoven Fabric 1 | 2.0 | 120 | 95.8 | 30 |
| Example 2 | Nonwoven Fabric 2 | 1.0 | 120 | 91.5 | 28 |
| Example 3 | Nonwoven Fabric 3 | 0.8 | 120 | 89.4 | 28 |
| Example 4 | Nonwoven Fabric 4 | 0.6 | 120 | 85.9 | 28 |
| Comparative Example 1 | Nonwoven Fabric 5 | 0.4 | 120 | 78.9 | 27 |
| Example 5 | Nonwoven Fabric 6 | 5.0 | 235 | 96.7 | 26 |
| Example 6 | Nonwoven Fabric 7 | 8.0 | 235 | 97.9 | 25 |
| Comparative Example 2 | Nonwoven Fabric 8 | 10.0 | 235 | 98.3 | 25 |
| Comparative Example 3 | Nonwoven Fabric 9 | 5.0 | 270 | 96.2 | 22 |
| Example 7 | Nonwoven Fabric 10 | 2.0 | 120 | 95.7 | 30 |
| Comparative Example 4 | Nonwoven Fabric 11 | 2.0 | 120 | 95.7 | 30 |
| Comparative Example 5 | Nonwoven Fabric 12 | 2.0 | 120 | 95.7 | 30 |
| Example 8 | Nonwoven Fabric 13 | 2.5 | 120 | 96.6 | 31 |
| Example 9 | Nonwoven Fabric 14 | 3.4 | 120 | 97.5 | 33 |
| Example 10 | Nonwoven Fabric 15 | 4.0 | 120 | 97.9 | 33 |
| Comparative Example 6 | Nonwoven Fabric 16 | 4.3 | 120 | 98.0 | 34 |
| Example 11 | Nonwoven Fabric 17 | 1.5 | 90 | 95.8 | 32 |
| Example 12 | Nonwoven Fabric 18 | 1.4 | 85 | 95.7 | 32 |
| Comparative Example 7 | Nonwoven Fabric 19 | 1.3 | 79 | 95.7 | 33 |
| Comparative Example 8 | Nonwoven Fabric 20 | 1.2 | 72 | 95.8 | 33 |
| Comparative Example 9 | Nonwoven Fabric 21 | 1.5 | 72 | 96.6 | 28 |
| Example 13 | Nonwoven Fabric 22 | 1.0 | 200 | 85.9 | 22 |
| Comparative Example 10 | Nonwoven Fabric 23 | 1.2 | 300 | 82.4 | 18 |
| Example 14 | Nonwoven Fabric 24 | 1.6 | 120 | 94.7 | 30 |

| | Inner Layer Fabric | | | | |
|---|---|---|---|---|---|
| | Sample | Thickness [mm] | Basis Weight [g/m$^2$] | Porosity [%] | Air Permeability [cc/(m$^2$·s)] |
| Example 15 | Nonwoven Fabric 25 | 1.6 | 120 | 94.7 | 31 |
| Example 16 | Nonwoven Fabric 26 | 2.6 | 120 | 96.8 | 32 |
| Example 17 | Nonwoven Fabric 27 | 1.2 | 120 | 94.3 | 30 |
| Example 18 | Nonwoven Fabric 28 | 1.2 | 120 | 94.2 | 30 |
| Example 19 | Nonwoven Fabric 29 | 1.2 | 120 | 94.0 | 30 |
| Example 20 | Fabric 1 | 1.2 | 170 | 90.0 | 28 |
| Example 21 | Fabric 2 | 2.0 | 120 | 96.7 | 30 |
| Example 22 | Nonwoven Fabric 1 | 2.0 | 120 | 95.8 | 30 |
| Example 23 | Nonwoven Fabric 1 | 2.0 | 120 | 95.8 | 30 |
| Example 24 | Nonwoven Fabric 1 | 2.0 | 120 | 95.8 | 30 |

[Table 1 (continued)]

| | Fiber Constituting Inner Layer Fabric | | | | | |
|---|---|---|---|---|---|---|
| | Matrix Material | Species of Fine Particles Contained | Particle Content [wt%] | Thermal Diffusivity of Fiber [$\times 10^{-6}$ $m^2/s$] | LOI | Specific Gravity [$g/cm^3$] |
| Example 1 | Aramid | Carbon | 8 | 2.5 | 27 | 1.42 |
| Example 2 | Aramid | Carbon | 8 | 2.5 | 27 | 1.42 |
| Example 3 | Aramid | Carbon | 8 | 2.5 | 27 | 1.42 |
| Example 4 | Aramid | Carbon | 8 | 2.5 | 27 | 1.42 |
| Comparative Example 1 | Aramid | Carbon | 8 | 2.5 | 27 | 1.42 |
| Example 5 | Aramid | Carbon | 8 | 2.5 | 27 | 1.42 |
| Example 6 | Aramid | Carbon | 8 | 2.5 | 27 | 1.42 |
| Comparative Example 2 | Aramid | Carbon | 8 | 2.5 | 27 | 1.42 |
| Comparative Example 3 | Aramid | Carbon | 8 | 2.5 | 27 | 1.42 |
| Example 7 | Aramid | Carbon | 5 | 2.2 | 27 | 1.40 |
| Comparative Example 4 | Aramid | Carbon | 3 | 2.0 | 25 | 1.39 |
| Comparative Example 5 | Aramid | - | - | 1.9 | 24 | 1.38 |
| Example 8 | Aramid | Carbon | 8 | 2.5 | 27 | 1.42 |
| Example 9 | Aramid | Carbon | 8 | 2.5 | 27 | 1.42 |
| Example 10 | Aramid | Carbon | 8 | 2.5 | 27 | 1.42 |
| Comparative Example 6 | Aramid | Carbon | 8 | 2.5 | 27 | 1.42 |
| Example 11 | Aramid | Carbon | 8 | 2.5 | 27 | 1.42 |
| Example 12 | Aramid | Carbon | 8 | 2.5 | 27 | 1.42 |
| Comparative Example 7 | Aramid | Carbon | 8 | 2.5 | 27 | 1.42 |
| Comparative Example 8 | Aramid | Carbon | 8 | 2.5 | 27 | 1.42 |
| Comparative Example 9 | Aramid | Carbon | 8 | 2.5 | 27 | 1.42 |
| Example 13 | Aramid | Carbon | 8 | 2.5 | 27 | 1.42 |
| Comparative Example 10 | Aramid | Carbon | 8 | 2.5 | 27 | 1.42 |
| Example 14 | Aramid | Carbon nanotubes | 5 | 8.5 | 26 | 1.42 |

| | Fiber Constituting Inner Layer Fabric | | | | | |
|---|---|---|---|---|---|---|
| | Matrix Material | Species of Fine Particles Contained | Particle Content [wt%] | Thermal Diffusivity of Fiber [$\times 10^{-6}$ $m^2/s$] | LOI | Specific Gravity [$g/cm^3$] |
| Example 15 | Aramid | Diamond | 6 | 4.3 | 26 | 1.42 |
| Example 16 | Aramid | Aluminum | 12 | 4.9 | 27 | 1.43 |
| Example 17 | Aramid | Silver | 21 | 2.7 | 27 | 1.75 |
| Example 18 | Aramid | Copper | 23 | 2.6 | 27 | 1.71 |
| Example 19 | Aramid | Gold | 18 | 2.6 | 27 | 1.66 |
| Example 20 | Aramid | Carbon | 8 | 2.5 | 27 | 1.42 |
| Example 21 | Carbon fiber | - | - | 6.1 | 27 | 1.82 |
| Example 22 | Aramid | Carbon | 8 | 2.5 | 27 | 1.42 |
| Example 23 | Aramid | Carbon | 8 | 2.5 | 27 | 1.42 |
| Example 24 | Aramid | Carbon | 8 | 2.5 | 27 | 1.42 |

[Table 1 (continued)]

| | Back Fabric Layer | | Whole | Protective Performance (Heat Shielding Property) | Comfort Property |
|---|---|---|---|---|---|
| | Sample | Basis Weight [g/m²] | Basis Weight [g/m²] | HTI24 [sec] | THL [W/m²] |
| Example 1 | - | | 510 | 16.7 | 380 |
| Example 2 | - | | 510 | 16.4 | 360 |
| Example 3 | - | | 510 | 16.4 | 350 |
| Example 4 | - | | 510 | 16.2 | 350 |
| Comparative Example 1 | - | | 510 | 15.8 | 350 |
| Example 5 | - | | 495 | 16.2 | 310 |
| Example 6 | - | | 495 | 16.3 | 300 |
| Comparative Example 2 | - | | 495 | 16.2 | 260 |
| Comparative Example 3 | - | | 530 | 16.4 | 230 |
| Example 7 | - | | 510 | 16.4 | 350 |
| Comparative Example 4 | - | | 510 | 15.8 | 380 |
| Comparative Example 5 | - | | 510 | 15.8 | 380 |
| Example 8 | - | | 510 | 17.1 | 390 |
| Example 9 | - | | 510 | 17.1 | 390 |
| Example 10 | - | | 510 | 16.3 | 400 |
| Comparative Example 6 | - | | 510 | 15.8 | 400 |
| Example 11 | - | | 480 | 16.2 | 390 |
| Example 12 | - | | 475 | 16.2 | 390 |
| Comparative Example 7 | - | | 469 | 15.8 | 390 |
| Comparative Example 8 | - | | 462 | 15.4 | 390 |
| Comparative Example 9 | - | | 462 | 15.7 | 360 |
| Example 13 | - | | 460 | 16.3 | 330 |
| Comparative Example 10 | - | | 560 | 16.9 | 250 |

| | Back Fabric Layer | | Whole | Protective Performance (Heat Shielding Property) | Comfort Property |
|---|---|---|---|---|---|
| | Sample | Basis Weight [$g/m^2$] | Basis Weight [$g/m^2$] | HTI24 [sec] | THL [$W/m^2$] |
| Example 14 | - | | 510 | 16.8 | 340 |
| Example 15 | - | | 510 | 16.6 | 348 |
| Example 16 | - | | 510 | 16.7 | 356 |
| Example 17 | - | | 510 | 16.5 | 380 |
| Example 18 | - | | 510 | 15.4 | 380 |
| Example 19 | - | | 510 | 16.3 | 380 |
| Example 20 | - | | 560 | 16.0 | 390 |
| Example 21 | - | | 510 | 16.7 | 380 |
| Example 22 | - | | 470 | 16.3 | 340 |
| Example 23 | Fabric D | 80 | 460 | 16.4 | 340 |
| Example 24 | Fabric D | 80 | 550 | 17.0 | 310 |

[Industrial Applicability]

The laminated fabric of the present invention has lightweight properties, comfort properties and heat shielding properties, and is useful for applications in protective clothing which is useful as working clothing used under high-temperature circumstances including firefighter clothing, by using the laminated fabric.

## Claims

1. A laminated fabric for protective clothing comprising two or more fabric layers including an outer layer and an inner layer, with the inner layer disposed on a skin side, when used in protective clothing, wherein the outer layer is a fabric composed of a fiber having an LOI value (limiting oxygen index) of 21 or more measured by JIS L 1091 E method and the inner layer is a fabric composed of a fiber having an LOI value (limiting oxygen index) of 21 or more measured by JIS L 1091 E method, and a thermal diffusivity of $2.2\times10^{-6}$ $m^2 \cdot s^{-1}$ or more, and the fabric of said inner layer has a porosity ranging from 85% to 98%, a thickness ranging from 0.5 mm to 8.0 mm and a basis weight ranging from 80 $g/m^2$ to 250 $g/m^2$.

2. The laminated fabric for protective clothing according to claim 1, wherein the fabric of the inner layer has an air permeability of 20 $cm^3/m^2 \cdot sec$ or more.

3. The laminated fabric for protective clothing according to claim 1, wherein the fiber composing the fabric of the inner layer is composed of a fiber-forming polymer and contains fine particles composed of a material having a thermal conductivity of 70 W/(m·k) or more.

4. The laminated fabric for protective clothing according to claim 3, wherein the fiber composing the fabric of the inner layer is composed of the fiber-forming polymer and contains at least one of fine particles of carbon powder, carbon nanotubes, diamond, silver, copper, gold and aluminum.

5. The laminated fabric for protective clothing according to claim 1, wherein the fabric of the inner layer is a nonwoven fabric.

6. The laminated fabric for protective clothing according to claim 1, wherein the fabric of the inner layer is raised.

7. The laminated fabric for protective clothing according to claim 1, wherein the fabric of the inner layer contains carbon fiber in an amount of 50% by weight or more.

8. The laminated fabric for protective clothing according to claim 1, wherein the fabric has an intermediate layer between the outer layer and the inner layer, and the intermediate layer is a fabric in which a moisture-permeable waterproof film is laminated on and fixed to a fabric composed of a fiber having an LOI value (limiting oxygen index) of 25 or more measured by JIS L 1091 E method.

9. The laminated fabric for protective clothing according to claim 1, wherein the fabric has a back fabric layer arranged on the skin side of the inner layer, when used in protective clothing.

10. Protective clothing using the laminated fabric for protective clothing according to any one of claims 1 to 9.

## Patentansprüche

1. Beschichtetes Gewebe für eine Schutzbekleidung, das zwei oder mehr Gewebeschichten aufweist, die eine äußere Schicht und eine innere Schicht umfassen, wobei die innere Schicht auf einer Hautseite angeordnet ist, wenn sie in einer Schutzbekleidung verwendet wird, wobei die äußere Schicht ein Gewebe ist, das aus einer Faser besteht, die einen durch das Verfahren JIS L 1091 E gemessenen LOI-Wert (Grenzsauerstoffindex) von 21 oder mehr aufweist, und die innere Schicht ein Gewebe ist, das aus einer Faser besteht, die einen durch das Verfahren JIS L 1091 E gemessenen LOI-Wert (Grenzsauerstoffindex) von 21 oder mehr und eine Temperaturleitfähigkeit von $2{,}2x10^{-6}$ $m^2 \cdot s^{-1}$ oder mehr aufweist, und das Gewebe der inneren Schicht eine Porosität, die von 85% bis 98% reicht, eine Dicke, die von 0,5 mm bis 8,0 mm reicht, und ein Riesgewicht aufweist, das von 80 $g/m^2$ bis 250 $g/m^2$ reicht.

2. Beschichtetes Gewebe für eine Schutzbekleidung nach Anspruch 1, wobei das Gewebe der inneren Schicht eine Luftdurchlässigkeit von 20 $cm^3/m^2 \cdot s$ oder mehr aufweist.

3. Beschichtetes Gewebe für eine Schutzbekleidung nach Anspruch 1, wobei die Faser, die das Gewebe der inneren Schicht bildet, aus einem faserbildenden Polymer besteht und feine Teilchen enthält, die aus einem Material bestehen, das eine Wärmeleitfähigkeit von 70 W/(m·k) oder mehr aufweist.

4. Beschichtetes Gewebe für eine Schutzbekleidung nach Anspruch 3, wobei die Faser, die das Gewebe der inneren Schicht bildet, aus dem faserbildenden Polymer besteht und mindestens eines der feinen Teilchen aus Kohlepulver, Kohlenstoffnanoröhren, Diamant, Silber, Kupfer, Gold und Aluminium enthält.

5. Beschichtetes Gewebe für eine Schutzbekleidung nach Anspruch 1, wobei das Gewebe der inneren Schicht ein Vliesstoff ist.

6. Beschichtetes Gewebe für eine Schutzbekleidung nach Anspruch 1, wobei das Gewebe der inneren Schicht geraut ist.

7. Beschichtetes Gewebe für eine Schutzbekleidung nach Anspruch 1, wobei das Gewebe der inneren Schicht Kohlefasern in einer Menge von 50 Gewichts-% oder mehr enthält.

8. Beschichtetes Gewebe für eine Schutzbekleidung nach Anspruch 1, wobei das Gewebe eine Zwischenschicht zwischen der äußeren Schicht und der inneren Schicht aufweist, und die Zwischenschicht ein Gewebe ist, in der ein feuchtigkeitsdurchlässiger wasserdichter Film ein Gewebe beschichtet und an ihm befestigt ist, das aus einer Faser besteht, die einen durch das Verfahren JIS L 1091 E gemessenen LOI-Wert (Grenzsauerstoffindex) von 25 oder mehr aufweist.

9. Beschichtetes Gewebe für eine Schutzbekleidung nach Anspruch 1, wobei das Gewebe eine hintere Gewebeschicht aufweist, die auf der Hautseite der inneren Schicht angeordnet ist, wenn sie in einer Schutzbekleidung verwendet wird.

10. Schutzbekleidung, die das beschichtete Gewebe für eine Schutzbekleidung nach einem der Ansprüche 1 bis 9 verwendet.

## Revendications

1. Tissu stratifié pour vêtement de protection comprenant deux couches de tissu ou plus comprenant une couche externe et une couche interne, la couche interne étant disposée sur un côté orienté vers la peau, quand elle est utilisée dans un vêtement de protection, dans lequel la couche externe est un tissu qui se compose d'une fibre ayant une valeur d'ILO (indice limite d'oxygène) de 21 ou plus, mesurée par la méthode JIS L 1091 E, et la couche interne est un tissu qui se compose d'une fibre ayant une valeur d'ILO (indice limite d'oxygène) de 21 ou plus, mesurée par la méthode JIS L 1091 E, et une diffusivité thermique de $2,2 \times 10^{-6}$ $m^2 \cdot s^{-1}$ ou plus, et le tissu de ladite couche interne ayant une porosité de 85 % à 98 %, une épaisseur de 0,5 mm à 8,0 mm et un grammage de 80 $g/m^2$ à 250 $g/m^2$.

2. Tissu stratifié pour vêtement de protection selon la revendication 1, dans lequel le tissu de la couche interne a une perméabilité à l'air de 20 $cm^3/m^2 \cdot$sec ou plus.

3. Tissu stratifié pour vêtement de protection selon la revendication 1, dans lequel la fibre constituant le tissu de la couche interne se compose d'un polymère fibrogène et contient des particules fines constituées d'un matériau ayant une conductivité thermique de 70 W/(m·k) ou plus.

4. Tissu stratifié pour vêtement de protection selon la revendication 3, dans lequel la fibre constituant le tissu de la couche interne se compose du polymère fibrogène et contient au moins un élément parmi des particules fines de poudre de carbone, des nanotubes de carbone, le diamant, l'argent, le cuivre, l'or et l'aluminium.

5. Tissu stratifié pour vêtement de protection selon la revendication 1, dans lequel le tissu de la couche interne est un tissu non tissé.

6. Tissu stratifié pour vêtement de protection selon la revendication 1, dans lequel le tissu de la couche interne est gratté.

7. Tissu stratifié pour vêtement de protection selon la revendication 1, dans lequel le tissu de la couche interne contient de la fibre de carbone dans une quantité de 50 % en poids ou plus.

8. Tissu stratifié pour vêtement de protection selon la revendication 1, dans lequel le tissu comporte une couche intermédiaire entre la couche externe et la couche interne, et la couche intermédiaire est un tissu dans lequel un film imperméable à l'eau et perméable à l'humidité est appliqué par stratification sur, et fixé à, un tissu qui se compose d'une fibre ayant une valeur d'ILO (indice limite d'oxygène) de 25 ou plus, mesurée par la méthode JIS L 1091 E.

9. Tissu stratifié pour vêtement de protection selon la revendication 1, le tissu comportant une couche dorsale de tissu disposée sur le côté de la couche interne orienté vers la peau, quand elle est utilisée dans un vêtement de protection.

10. Vêtement de protection utilisant le tissu stratifié pour vêtement de protection selon l'une quelconque des revendications 1 à 9.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 1939339 A1


### Non-patent literature cited in the description


- Chemical Handbook. Maruzen Co., Ltd,